(19) Europäisches Patentamt
European Patent Office
Office européen des brevets

(11) Publication number : **0 134 080 B2**

(12) **NEW EUROPEAN PATENT SPECIFICATION**

(45) Date of publication of the new patent specification : **12.01.94 Bulletin 94/02**

(51) Int. Cl.$^5$ : **C07F 9/00,** C08F 4/76, C08F 210/06, C08F 236/06

(21) Application number : **84304183.1**

(22) Date of filing : **21.06.84**

(54) **Catalyst for alpha-olefin polymerization.**

(30) Priority : **31.08.83 US 528020**
**31.08.83 US 528202**

(43) Date of publication of application :
**13.03.85 Bulletin 85/11**

(45) Publication of the grant of the patent :
**07.06.89 Bulletin 89/23**

(45) Mention of the opposition decision :
**12.01.94 Bulletin 94/02**

(84) Designated Contracting States :
**DE FR GB IT NL**

(56) References cited :
**DE-A- 2 706 118**
**DE-A- 2 755 192**
**JOURNAL OF APPLIED POLYMER SCIENCE, Vol. 26, No. 8, August 1981, pages 2503-2508; W. WIEDER et al.: "Improved coordination catalyst for the alternati ng copolymerization of butadiene and propylene"**
**Z. ANORG. ALLG. CHEM. 418, pp. 65-71. 1975**
**Z. ANORG. ALLGG. CHEM. 296, pp. 36-45, 1958**

(73) Proprietor : **UNIROYAL CHEMICAL COMPANY, Inc.**
**World Headquarters**
**Middlebury Connecticut 06749 (US)**

(72) Inventor : **Khan, J.A.**
**67 Newfield Avenue Waterbury**
**New Haven Connecticut 06708 (US)**
Inventor : **Smudin, D.J.**
**88 National Avenue, Apt. 4 Waterbury**
**New Haven Connecticut 06854 (US)**
Inventor : **Nudenberg, W.**
**Route 3, Taunton Lake Road Newton**
**Fairfield Connecticut 06740 (US)**
Inventor : **Matthews, D.N.**
**49 Brookwood Road Bethany**
**New Haven Connecticut 06525 (US)**

(74) Representative : **Browne, Robin Forsythe, Dr. et al**
**Urquhart-Dykes & Lord Tower House Merrion Way**
**Leeds LS2 8PA West Yorkshire (GB)**

**EP 0 134 080 B2**

## Description

Background of the disclosure

1. Field of the invention

The instant invention is directed to the preparation of a compound having the formula

$$(O)_nV(OCH_2R)_p(OR')_qX_m$$

where R is a tertiary alkyl having 4 to 18 carbon atoms; R' is $C_1$-$C_{18}$ alkyl and if q is 2, R' can also be linear or branched $C_2$-$C_8$ alkylene; X is chlorine, bromine or iodine; n is 0 or 1, if n is 0 then m is 0, 1, 2 or 3; p is an integer of 1 to 4; and q is 4-(p+m); if n is 1 then m is 0, 1 or 2; p is 1 or 3; and q is 3-(p+m) with the limitation that if n is 1, p is 2 and R is tertiary butyl, X cannot be chlorine. The invention is also directed to the use of said compound as a catalyst in the polymerization of alpha-olefins. Further, the invention includes a composition useful as a catalyst comprising the compound of this invention and a catalyst activator.

2. Background of the prior art.

The utilization of catalysts in chemical reactions is often essential for the commercialization of important industrial chemicals. An excellent example of this is the polymerization of alpha-olefins. As those skilled in the art are aware, this polymerization reaction is catalyzed by various compounds which incorporate vanadium in the structure. These compounds, useful as polymerization catalysts, have significantly contributed to the development of poly(alphaolefin) plastics and elastomerics.

Although these compounds effectively catalyze the polymerization of alpha-olefin monomers, their relatively low efficiency, that is, the mass of polymer produced per mole of catalyst charged, requires a catalyst removal step.

The removal of catalyst residue from alpha-olefin polymers is an especially perplexing problem. The non-removal of the catalyst creates an inferior product in that the catalyst enhances degradation of the polymer. Complete removal of the catalyst from polymers in the prior art is time-consuming and expensive.

Wieder and Witte, *Journal of Applied Polymer Science* 26, 2503-2508 (1981) disclose the utilization of a compound of the formula $VO(OR)_2Cl$, where R is an alkyl, as a catalyst in the production of an alternating copolymer of butadiene and propylene. The paper suggests the formation of said compound by the reaction of two equivalents of an alcohol with 1 equivalent of $VOCl_3$ citing J. Witte et al, German Offen. 2,706,118 (1977). This reference does not disclose or suggest any other compounds not does it disclose or suggest any other reaction or polymerization for which the compounds of that paper could additionally be used as a catalyst.

The above remarks establish the importance of new improved compounds, useful as catalysts in the polymerization of alpha-olefins, which overcome the efficiency problems of the alpha-olefin polymerization catalysts of the prior art.

Summary of the invention

The instant invention is directed to the preparation of class of compounds which are excellent catalysts for the polymerization of alpha-olefins. Polymerization reactions employing these compounds are characterized by increased efficiency, in terms of mass of polymer produced per unit mole of catalyst, over the known catalysts employed in the polymerization of alpha-olefins in the prior art. The polymer thus formed contains less catalyst residue and is characterized by favorable molecular weight distribution leading to easier downstream processability.

In accordance with the instant invention, there is provided a process for the preparation of a compound of the formula

$$(O)_nV(OCH_2R)_p(OR')_qX_m \qquad (I)$$

where R is a tertiary alkyl having 4 to 18 carbon atoms; R' is $C_1$-$C_{18}$ alkyl and if q is 2, R' can also be linear or branched $C_2$-$C_8$ alkylene; X is chlorine, bromine or iodine; n is 0 or 1; if n is 0 then m is 0, 1, 2 or 3; p is an integer of 1 to 4 and q is 4-(p+m); if n is 1 then m is 0, 1 or 2; p is 1 or 3; and q is 3-(p+m) with the limitation that if n is 1, p is 2 and R is tertiary butyl then X cannot be chlorine, the process comprising reacting p moles of an alcohol of the formula $RCH_2OH$ with 1 mole of $V(O)_nX_v$ where v is the sum of m, p and q, under a continual steam of of nitrogen gas in the absence (n=1) or presence (n=0) of an acid acceptor.

In further accordance with the instant invention a process is provided for the polymerization of a monomer selected from the group consisting of ethylene, ethylene and at least one compound of the formula $CH_2$=$CHR^1$ wherein $R^1$ is $C_1$-$C_{10}$ alkyl, and ethylene, at least one compound of the formula $CH_2$=$CHR^1$, where $R^1$ has the

meaning given above and a non-conjugated copolymerizable diene wherein said polymerization is catalyzed by a compound of the formule I where R, R', X, m, n, p and q have the meanings given above except that when n is 1, p is 2 and R is tertiary butyl X can be chlorine and a compound having the formula $R^2_rAlX^2_s$ where $R^2$ is $C_1$-$C_{12}$ alkyl or $C_7$-$C_9$ aralkyl; $X^2$ is a halogen atom, r is 1, 1,5, 2 or 3 and s is 3-r.

Yet in further accordance with the instant invention a composition is provided which comprises a compound of the formula I where R, R', X, m, p and q have the meanings given above, except that when n is 1, p is 2 and R is tertiary butyl, X can be chlorine and a compound of the formula

$$Y_tX^1_uCC(R^3)=C(R^4)R^5$$

where Y is hydrogen, cyano or $C_2$-$C_{19}$ carbalkoxy; $X^1$ is chlorine or bromine; $R^3$ is hydrogen, chlorine, bromine or $-COOR^6$ wherein $R^6$ is $C_1$-$C_{18}$ alkyl, $C_3$-$C_{18}$ alkenyl, $C_5$-$C_6$ cycloalkyl, $C_7$-$C_9$ aralkyl or $C_6$-$C_{10}$ aryl; $R^4$ is hydrogen, chlorine, bromine or $C_1$-$C_{18}$ linear or branched alkyl; or $R^3$ and $R^4$ together is $C_3$-$C_{10}$ alkylene; $R^5$ is an electron withdrawing group; u is an integer of 1 to 3; and t is an integer of 3-u.

## Detailed description

The compound prepared by the process of this invention has the formula

$$(O)_nV(OCH_2R)_p(OR')_qX_m \qquad (I)$$

where R is a tertiary alkyl having 4 to 18 carbon atoms; R' is $C_1$-$C_{18}$ alkyl or if q is 2, R' can also be a $C_2$-$C_8$ linear or branched alkylene; X is chlorine, bromine or iodine; n is 0 or 1, if n is 0 then m is 0, 1,2 or 3; p is an integer of 1 to 4; and q is 4-(p+m); if n is 1 then m is 0, 1 or 2; p is 1 or 3; and q is 3-(p+m) with the limitation that if n is 1, p is 2 and R is tertiary butyl, X cannot be chlorine.

More preferably, the meanings of the functional groups of the formula I are as follows: R is a tertiary alkyl of 4 to 12 carbons atoms; R' is a $C_1$-$C_{12}$ alkyl, or if q is 2, R' can also be $C_2$-$C_6$ linear or branched alkylene; X is chlorine or bromine; n is 1; m is 0 or 1; p is 2 or 3; and q is 3-(p+m) with the limitation that if p is 2, m is 0.

Still more preferably, the meanings of the functional groups of formula I are as follows: R is a tertiary alkyl of 4 to 6 carbon atoms; R' is $C_3$-$C_6$ alkyl n is 1, m is 0, p is 2 or 3 and q is 0 or 1.

Among the species within the contemplation of the generic formula given above, are tris-neopentyl vanadate and dichloroneopentyl vanadate, and the compounds of Tables 1 and 2 below.

The compound having the formula I where R is a tertiary alkyl having 4 to 18 carbon atoms; R' is $C_1$-$C_{18}$ alkyl, or if q is 2, R' can also be $C_2$-$C_8$ alkylene; X is chlorine, bromine or iodine; n is 0 or 1 and if n is 0 then m is 0, 1,2 or 3; p is an integer of 1 to 4; and q is 4-(p+m); or if n is 1 then m is 0, 1 or 2; p is 1 or 3 and q is 3-(p+m), with the limitation that if n is 1, p is 2, R is tertiary butyl, X cannot be chlorine, is prepared by reacting p moles of an alcohol of the formula $RCH_2OH$ with 1 mole of a compound of the formula $V(O)_nX_v$, where v is the sum of q, m and p. In the preferred embodiment wherein n is 0 the reaction occurs in the presence of an acid acceptor.

In a preferred embodiment the compound $V(O)_nX_v$ is in solution where the solvent is an aliphatic or aromatic hydrocarbon. Of the aliphatic or aromatic hydrocarbons, toluene and n-heptane are particularly preferred.

The compounds prepared by the process of the invention are useful as catalysts in the polymerization of a monomer or monomers selected from the group consisting of ethylene, ethylene and at least one compound of the formula $CH_2$=$CHR^1$ where $R^1$ is $C_1$-$C_{10}$ alkyl and ethylene, at least one compound of the formula $CH_2$=$CHR^1$ where $R^1$ has the meaning above and a non-conjugated copolymerizable diene. In this polymerization a compound of the formula

$$(O)_nV(OCH_2R)_p(OR')_qX_m \qquad (II)$$

where R is a tertiary alkyl having 4 to 18 carbon atoms; R' is $C_1$-$C_{18}$ alkyl, or if q is 2, R' can also be $C_2$-$C_8$ linear or branched alkylene; X is chlorine, bromine or iodine; n is 0 or 1; if n is 0 then m is 0, 1,2 or 3; p is an integer of 1 to 4; and q is 4-(p+m); if n is 1 then m is 0, 1 or 2; p is 1,2 or 3; and q is 3-(p+m), is employed as a catalytic agent. In this polymerization reaction a co-catalyst, a compoundhaving the formula $R^2_rAlX_s$, where $R^2$ is $C_1$-$C_{12}$ alkyl or $C_7$-$C_9$ aralkyl; X is a halogen atom; r is 1, 1.5, 2 or 3; and s is 3-r, is also employed.

In a preferred embodiment the compound II has the following meanings: R is a tertiary alkyl of 4 to 12 carbon atoms; R' is $C_1$-$C_{12}$ alkyl or if q is 2, R' can also be $C_2$-$C_6$ linear or branched alkylene; X is chlorine or bromine; n is 1; m is 0 or 1; p is 2 or 3; and q is 3-(p+m).

In a more preferred embodiment the compound II has the meanings: R is a tertiary alkyl of 4 to 6 carbon atoms; R' is a $C_3$-$C_6$ alkyl; n is 1; m is 0; p is 3; and q is 0.

In yet another preferred embodiment of this polymerization reaction a catalyst activator is also employed. In this preferred embodiment the catalyst activator is a compound of the formula

$$Y_tX^1_uCC(R^3)=C(R^4)R^5$$

wherein Y is hydrogen, cyano or $C_2$-$C_{19}$ carbalkoxy; $X^1$ is chlorine or bromine; $R^3$ is hydrogen, chlorine, bromine

or -$COOR^6$, wherein $R^6$ is $C_1$-$C_{18}$ alkyl, $C_3$-$C_{18}$ alkenyl, $C_5$-$C_6$ cycloalkyl, $C_7$-$C_9$ aralkyl or $C_6$-$C_{10}$ aryl; $R^4$ is hydrogen, chlorine, bromine or $C_1$-$C_{18}$ linear or branched alkyl; or $R^3$ and $R^4$ together is $C_3$-$C_{10}$ alkylene; $R^5$ is an electron withdrawing group; u is an integer of 1 to 3; and t is an integer of 3-u. The compounds within the contemplation of this generic class can be made in accordance with the procedure enumerated in copening application EP-A-134079.

Of the polymerization reactions within the contemplation of this process the polymerization of ethylene, at least one compound of the formula $CH_2$=$CHR^1$ where $R^1$ is $C_1$-$C_{10}$ alkyl and a non-conjugated copolymerizable diene is most preferred. In this preferred embodiment the non-conjugated diene is preferably selected from the group consisting of 5-ethylidene-2-norbornene, 1,4-hexadiene and dicyclopentadiene.

The process for polymerizing the class of monomers recited above, i.e., ethylene and at least one compound of the formula $CH_2$=$CHR^1$ and ethylene, at lesat one compound of the formula $CH_2$=$CHR^1$ and a non-conjugated polymerizable diene, may be carried out in the presence or absence of an inert reaction medium to the polymerization reactants.

In another aspect of the present invention a composition is provided. The composition, useful in the polymerization of a monomer or monomers selected from the group consisting of thylene, ethylene and at least one compound of the formula $CH_2$=$CHR^1$ where $R^1$ is $C_1$-$C_{10}$ alkyl and ethylene, at least one compound of the formula $CH_2$=$CHR^1$ where $R^1$ is $C_1$-$C_{10}$ alkyl and a non-conjugated copolymerizable diene, comprises a compound of the formula II, where R, R', X, n, m, p and q have the meanings given for compound II and a compound of the formula

$$Y_tX^1_uCC(R^3)=C(R^4)R^5$$

wherein Y is hydrogen, cyano or $C_2$-$C_{19}$ carbalkoxy; X is chlorine or bromine; $R^3$ is hydrogen, chlorine, bromine or -$COOR^6$ wherein $R^6$ is $C_1$-$C_{18}$ alkyl, $C_3$-$C_{18}$ alkenyl, $C_5$-$C_6$ cycloalkyl, $C_7$-$C_9$ aralkyl or $C_6$-$C_{10}$ aryl; $R^4$ is hydrogen, chlorine, bromine or $C_1$-$C_{18}$ linear or branched alkyl; or $R^3$ and $R^4$ together is $C_3$-$C_{10}$ alkylene; $R^5$ is an electron withdrawing group; u is an integer of 1 to 3; and t is an integer of 3-u. It is reiterated that the compounds within the contemplation of this latter generic formula of the composition of this invention are made in accordance with the procedure set forth in copending patent application EP-A-134079.

In a preferred embodiment of the instant invention the meanings of the functional group in formula II are as follows: R is a tertiary alkyl of 4 to 12 carbon atoms; R' is a $C_1$-$C_{12}$ alkyl or, if q is 2, R' can also be $C_2$-$C_6$ linear or branched alkylene; X is chlorine or bromine; n is 1; m is 0 or 1; p is 2 or 3; and q is 3-(p+m).

Still more preferably, the meanings of the functional groups in formula I are as follows: R is a tertiary alkyl of 4 to 6 carbon atoms; $R^1$ is a $C_3$-$C_6$ alkyl; n is 1; m is 0; p is 3 and q is 0.

In a further preferred embodiment of this composition of this invention includes the compound

$$(Y_tX^1_uCC(R^3)=C(R^4)R^5$$

wherein Y is hydrogen; $X^1$ is chlorine or bromine; $R^3$ is hydrogen, chlorine or -$COOCH_3$; $R^4$ is hydrogen, chlorine, bromine or $C_1$-$C_4$ alkyl; $R^5$ is chlorine, bromine, iodine, cyano, nitro, trihalomethoxy, halo meaning F, Cl or Br, $C_2$-$C_{19}$ alkylcarbonyl, $C_2$-$C_{19}$ alkylcarbony, $C_1$-$C_{18}$ alkylsulfonyl, $C_7$-$C_9$ aralkylsulfonyl or $C_7$-$C_{18}$ alkarylsulfonyl with the meanings as given above. Still more preferable, the above compound has the following meanings; $R^3$ is hydrogen or chlorine; $R^4$ is hydrogen, chlorine or $C_1$-$C_4$ alkyl; $R^5$ is $C_3$-$C_{11}$ alkoxycarbonyl; $X^1$ is chlorine or bromine and us is 3.

In yet a still further preferred embodiment of the composition of the present invention, the composition includes a compound of the formula $R^2_rAlX^2_s$ where $R^2$ is $C_1$-$C_{12}$ alkyl or $C_7$-$C_9$ aralkyl; $X^2$ is a halogen atom, r is 1, 1.5, 2 or 3; and s is 3-r.

The composition of this invention, described above finds a particular application in the catalytic polymerization of ethylene, and at least one compound of the formula $CH_2$=$CHR^1$ where $R^1$ is $C_1$-$C_{10}$ alkyl or ethylene, at lesat one compound of the formula $CH_2$=$CHR^1$ where $R^1$ has the meaning above and a non-conjugated diene.

Example 1

Synthesis of tris-neopentyl vanadate

A solution of 4.74 ml (50 mmol) vanadium oxytrichloride ($VOCl_3$) was dissolved in 50 ml of dried toluene and introduced into a clean dried three necked round bottom 250 ml flask. The flask was equipped with a reflux condenser, a magnetic stirrer, a dropping funnel, a nitrogen inlet and a gas outlet in communication with a flask filled with a sodium hydroxide solution.

A solution of 13.22 gm. (150 millimoles) of neopentyl alcohol in 50 ml of dried toluene was added dropwise into the flask holding the $VOCl_3$ through the dropping funnel. The entire volume of the alcohol solution was

dripped into the 250 ml flask in about 20 minutes. Hydrogen chloride gas generated by this reaction flowed upward through the outlet into the sodium hydroxide solution.

Stirring of the contents of the 250 ml flask was continued for 5 hours at ambient temperature under a continual stream of nitrogen gas. At the end of 5 hours hydrogen chloride gas generation had ceased. This cessation of gas generation indicated the completion of the reaction. With this, the nitrogen gas flow, whose purpose was the flushing out of the hydrogen chloride gas, was shut off.

The liquid in the 250 ml flask was subjected to a rotary evaporator whereby the toluene solvent was removed. The remaining liquid, the product of this reaction was isolated as a yellowish viscous oil.

The reaction which occurred in this example is summarized below:

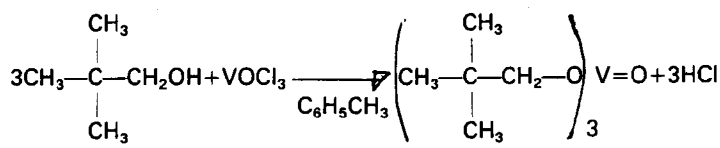


The IR spectroscopy of tris-neopentyl vanadate did not show any absorption in the frequency range (3200-3650 $cm^{-1}$) characteristic of the -OH of neopentyl alcohol. Thus, all the neopentyl alcohol reacted completely with $VOCl_3$ and resulted in the formation of tris-neopentyl vanadate. Absorption at about 1450 $cm^{-1}$ fro the alpha group ($-CH_2-$) confirmed the presence of the neopentyl group in the vanadate. Isolation of the corresponding amount of NaCl from the NaOH solution (through which the HCl generated was passed) further confirmed the formation of tris-neopentyl vanadate.

Example 2

Synthesis of dichloroneopentyl vanadate

Using the same experimental procedure and equipment as employed in Example 1, 9.48 ml. of vanadium oxytrichloride (100 millimoles) was dissolved in 50 milliliters of toluene. To this solution was added, dropwise, 8.82 gms (100 millimoles) of neopentyl alcohol solution dissolved in 50 milliliters of toluene.

After reaction and purification, a yellowish viscous oil was obtained in 90% yield.

The reaction is summarized as follows:

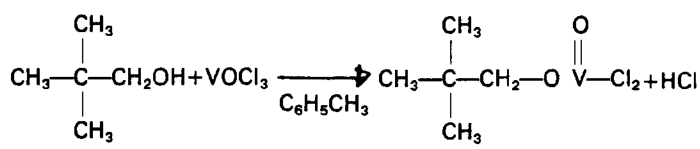


The IR spectroscopy of dichloroneopentyl vanadate did not show any absorption in the frequency range (3200-3650 $cm^1$) characteristic of the -OH of neopentyl alcohol. Thus, all the neopentyl alcohol reacted completely with $VOCl_3$ and resulted in the formation of dichloroneopentyl vanadate. Absorption at about 1450 $cm^{-1}$ for the alpha group ($-CH_2-$) confirmed the presence of the neopentyl group in the vanadate. Isolation of the corresponding amount of NaCl from the NaOH solution (through which the HCl generated was passed) further confirmed the formation of dichloroneopentyl vanadate.

Examples 3-8

Synthesis of additional vanadates

Following the procedure of Example 1, species having the generic formula

$$(O)_nV(OCH_2R)_p(OR')_qCl_m$$

are produced. The compounds produced are tabulated in Table 1.

TABLE 1

| Example No. | R | R' | n | m | p |
|---|---|---|---|---|---|
| 3 | t-$C_4H_9$ | $C_4H_9$ | 1 | 0 | 2 |
| 4 | t-$C_4H_9$ | i-$C_3H_7$ | 1 | 1 | 1 |
| 5 | t-$C_{18}H_{37}$ | $CH_3$ | 1 | 0 | 2 |
| 6 | t-$C_6H_{13}$ | $-CH_2C(CH_3)_2CH_2-$ | 1 | 0 | 1 |
| 7 | t-$C_{18}H_{37}$ | $-(CH_2)_4-$ | 1 | 0 | 1 |
| 8 | t-$C_{12}H_{25}$ | — | 1 | 0 | 3 |

Examples 9-11

Synthesis of additional vanadates

Example 1 is repeated with the exception that the $VOCl_3$ reactant is replaced with $VCl_4$. The reaction includes the presence of an acid acceptor such as $NH_3$. Table 2 summarizes compounds of the formula

$$(O)_nV(OCH_2R)_p(OR')_qCl_m$$

that are produced.

TABLE 2

| Example No. | R | R' | n | m | p |
|---|---|---|---|---|---|
| 9 | t$C_{12}$-$C_{25}$ | $C_{12}H_{25}$ | 0 | 0 | 2 |
| 10 | t$C_4H_9$ | $C_{12}H_{37}$ | 0 | 1 | 1 |
| 11 | — | $C_4H_9$ | 0 | 0 | 0 |

Example 12

Synthesis of EPDM polymer utilizing bis-neopentyl chloro vanadate as a catalyst

N-heptane was introduced into a cleaned and dried three-necked round bottom flask. The flask was equipped with an overhead mechanical stirrer, a thermometer, a condensor, a gas inlet tube and a 1000 ml dropping funnel to which the n-heptane (1000 ml, dried over alumina) was placed into the flask.

Ethylene and propylene gases were simultaneously added to the n-heptane filled flask through the gas inlet tube. Both olefin gases were free of air and had been previously dried by passing through columns of 3A and 13X molecular sieves. This gas introduction step continued until both olefins were saturated in the n-heptane solvent (approximately 5 minutes). Saturation was signalled by plateauing of increasing temperature of the heptane solution.

To the saturated solution of n-heptane, ethyl aluminum sesquichloride (EASC), a co-catalyst, was added by charging EASC in n-heptane solution (1.35 ml of 0.74M, about 1 millimole) into the flask through the dropping funnel.

Polymerization was initiated immediately thereafter by the dropwise additionof a catalyst solution comprising bis-neopentyl chloro vanadate (BNCV), a catalyst (0.0125 millimole), butyl 4,4,4,-trichlorobut-2-transenoate (BTCB), a catalyst activator (0.6 millimole) and 5 - ethylidene - 2 - norbornene (ENB), a non-conjugated diene (2 ml, about 10 millimoles) all in dried n-heptane (60 ml) through the dropping funnel.

The run continued for approximately 50 minutes. During this time the catalyst solution was continuously introduced dropwise into the flask through the dropping funnel. Additionally, ethylene and propylene gases were continuously fed into the flask through the gas inlet tube. It is noted that both gases were free of air and dried in the manner described above.

During the polymerization solution temperature increased slowly until a maximum was reached followed by a similar slow retreat in temperature. Sixty minutes after the polymerization reaction began (10 minutes after the complete addition of the catalyst, activator solution) the reaction was terminated by the addition of isopropanol (5 ml).

Thereafter, the polymer in solution was extracted with isopropanol to which a small amount of antioxidant was added. The stabilized polymer was recovered, weighed and analyzed.

The polymer was analyzed as EPDM characterized by an ethylene to propylene weight ratio of 76:24, an intrinsic viscosity, as measured in tetralin at 135°C, of 2.53, an iodine number of 6.8 and a glass transition temperature of -41°C. The yield of EPDM polymer was 53.4 grams. From this, and a knowledge of the weight of the BNCV catalyst introduced into the reaction, the catalyst efficiency and vanadium residue were calculated. The catalyst efficiency, the weight of polymer produced per millimole of BNCV was 4,352 and the vanadium residue in parts per million parts of polymer was 11.9.

These results are also tabulated in Table 3 below.

Example 13

Synthesis of EPDM polymer utilizing tris-neopentyl vanadate as a catalyst

The polymerization reaction was carried out in exactly the same manner as has been described in Example 12 including the quantities of ingredients used in that example but for the substitution of 0.0125 millimole of tris-neopentyl vanadate (TNPV) for the 0.0125 millimole of BNCV of Example 12. Similarly successful results were obtained including a catalyst efficiency of 3040 grams of polymer per millimole of TNPV. The full results of this example are summarized in Table 3.

Examples 15-17

Synthesis of EPDM polymer utilizing bis-neopentyl chloro vanadate

Three additional experiments were run in exact accordance with example 12 with the exception that the BTCB catalyst activator of Example 12 was replaced with an equimolar amount of different activators: methyl 4,4,4 - trichloro - 2 - methylbut - 2 - enoate (MTMB) in Example 14; butyl perchlorocrotonate (BPCC) in Example 15; and ethyl 4,4,4 - trichlorobut - 2 - enoate (ETCB) in Example 16. All three runs were successful and are summarized in Table 3.

Comparative example 1

Example 12 was repeated exactly but for the substitution of catalyst of the prior art, vanadium oxytrichloride ($VOCl_3$) for the BNCV of Example 12. The resultant EPDM product had properties summarized in Table 3.

Comparative example 2

Example 15 was repeated but for the substition of the commonly employed catalyst of the prior art, vanadium oxytrichloride, for the catalyst, BNCV, of the current invention. The resultant EPDM product was produced in an amount and in a quality tabulated in Table 3.

TABLE 3

| Example No. | 12 | 13 | 14 | 15 | 16 | Comp 1 | Comp 2 |
|---|---|---|---|---|---|---|---|
| Catalyst | BNCV | TNPV | BNCV | BNCV | BNCV | $VOCl_3$ | $VOCl_3$ |
| Catalyst activator | BTCB | BTCB | MTMB | BPCC | ETCB | BTCB | BPCC |
| Molar ratio (Cat Act/Cat) | 48:1 | 48:1 | 48:1 | 48:1 | 48:1 | 48:1 | 48:1 |
| Weight ratio (Cat Act/Cat) | 42.6:1 | 32:1 | 37.7:1 | 54.5:1 | 37.7:1 | 68:1 | 87:1 |
| Yield (g of polymer) | 54.4 | 38 | 51 | 37.2 | 49 | 23 | 24 |
| Catalyst Eff (g Polymer/mmol V) | 4352 | 3040 | 4080 | 2976 | 3920 | 1840 | 1920 |
| Vanadium residue (parts V per million parts polymer) | 11.9 | 16.7 | 12.5 | 17 | 13 | 27.7 | 26.5 |
| Ethylene/Propylene wt ratio | 76/24 | 69/31 | 74/26 | 71/29 | 70/30 | 72/28 | 71/29 |
| IV (Tetralin at 135°C) | 2.53 | 2.30 | 2.37 | 2.06 | 2.11 | 3.13 | 2.64 |
| $I_2$ No. | 6.8 | 9.5 | 9.5 | 8.0 | 8.0 | 16.3 | 10.6 |
| $T_g$(°C) | −41 | −45 | −46 | −51 | −45 | −38 | −45 |

Discussion

The comparative examples establish the unexpectedly improved catalyst efficiency obtained in employing the catalysts of this invention. When all other factors were the same, the use of BNCV of this invention resulted in a catalyst efficiency of 4,352 grams of EPDM per millimole of vanadium (Example 12) (moles of V equal moles of catalyst) compared to an efficiency of 1,840 grams of EPDM per millimole of vanadium when the commonly employed catalyst of the prior art, vanadium trioxychloride, was employed. This, in turn, resulted in a catalyst residue, as measured as parts of vanadium per million parts of EPDM polymer, of 11.9 in the case where BNCV was the catalyst compared to a catalyst residue of 27.7 ppm when $VOCl_3$ was similarly employed.

The same remarkable results obtained in comparing Example 12 with Comparative Example 1, were observed in the comparison between Example 15 of the current invention and Comparative Example 2 of the prior art. Example 15, using BNCV, a catalyst of the instant invention, a catalyst efficiency of 2,976 was obtained compared to an efficiency of 1,920 when $VOCl_3$, a catalyst of the prior art was used. A similar improved result is noted in the catalyst residue. Comparative Example 2, results in a residue of 26.5 parts of vanadium per million parts of polymer while the invention made in accordance with the present invention provides a decreased residue of 17 parts of vanadium per million parts of polymer.

In addition to the quantitative improvements summarized above, the EPDM polymer produced in accordance with instant invention as compared to those obtained using a catalyst of the prior art is of a higher quality as well. As those skilled in the art are aware molecular weight regulation of elastomeric polymers is important in processing of rubbers. Those with shorter chains provide such easier processing. In the above two comparisons the use of the catalysts of this invention result in lower IV's, an indicia of polymer chain length.

Example 17

Synthesis of EPMD polymer utilizing bis-neopentyl chloro vanadate as a catalyst

Polymerization grade propylene gas (500 g) was condensed in a 2 liter Parr autoclave by cooling the autoclave externally with dry ice. The Paar autoclave was equipped with a pressure gauge, an inlet tube, an outlet port, a safety disc and a stirrer assembly. Prior to the introduction of the propylene and autoclave had been cleaned, dried and purged with nitrogen.

The Paar autoclave, filled with propylene, was warmed to -19°C. Hydrogen gas was introduced into the autoclave by supplying it to the autoclave at a pressure of 137.9 kN/$m^2$ (20 psig) which represented 137.9 kN/$m^2$ (20 pounds per square inch) in excess of the pressure in the autoclave (overpressure). Similarly, ethylene gas was introduced at 137.9 kN/$m^2$ (20 pounds per square inch) overpressure. 1.48 millimole of ethyl aluminum sesquichloride (EASC) was added through the outlet port.

A solution including .025 millimole of bis-neopenyl chlorovanadate (BNCV), 5.4 grams of 5 -ethylidene - 2 - norbornene (ENB) and 0.4 millimole of butyl 4,4,4 - trichlorobut - 2 - transenoate (BTCB) was added to initiate the reaction.

The autoclave was stirred at moderately high speed and, at the same time, cooled by a -27°C bath which comprised dry ice in isopropanol to prevent heat buildup in the autoclave.

Ethylene was continuously fed into the autoclave. Over the remainder of the 45 minute run the remainder of the BNCV catalyst and BTCB catalyst activator were added to the reaction. It is noted that the initial charge of the BNCV and BTCB represented 20% by weight of the total catalyst and catalyst activator provided during the run.

In spite of the heat transfer arrangement the temperature in the autoclave rose from -20°C to 7°C after 1 hour. At this point the reaction was short stopped by adding isopropanol to the autoclave.

The polymer product of this reaction dispersed in the reaction mass was recovered by filtration. The yield was 110.3 g representing 16.8% solids based on the total weight of the slurry. This represented a catalyst efficiency of 4,412 g of polymer per millimole of vanadium catalyst. Assuming no recovery of catalyst residue, this represents a concentration of approximately 11.7 parts per million of vanadium in the polymer product.

The polymer product was analyzed and found to have the properties summarized in Table 4 below. Table 4 also includes a summary of the operating conditions of this example.

Example 18

Example 17 was repeated except that the amount of the catalyst activator BTCB was reduced. In this example the amount BTCB was 0.0125 millimole. Thus, the molar ratio of catalyst activator to catalyst was reduced from 16:1 to 8:1. A summary of this example including its results are provided in Table 4.

Example 19

Example 18 was repeated except that the total duration of the run was decreased by one-third from 1 hour to 40 minutes. This example is also summarized in Table 4.

TABLE 4

| Example No. | 17 | 18 | 19 |
|---|---|---|---|
| Propylene, g | 500 | 500 | 492 |
| Ethylene, g | 85.7 | 85.2 | 75.9 |
| ENB, g | 5.4 | 5.4 | 5.4 |
| Catalyst, BNCB, mmol | 0.025 | 0.0125 | 0.0125 |
| Cat. Activator, BTCB, mmol | 0.4 | 0.4 | 0.4 |
| Molar ratio (Cat/Cat act) | 16 | 32 | 32 |
| Hydrogen, (psig) $kN/m^2$ | 137.9 (20) | 137.9 (20) | 137.9 (20) |
| Reaction time, min | 60 | 60 | 40 |
| Yield, gm of polymer | 110.3 | 91.6 | 81.0 |
| Efficiency, gm of polymer per mmol of V catalyst | 4412 | 7328 | 6480 |
| Solids, % by Wt of polymer in propylene | 16.8 | 13.9 | 12.6 |
| Vanadium in polymer, ppm | 11.7 | 6.9 | 7.9 |
| Intrinsic viscosity of polymer (Tetralin at 135°C) | 3.59 | 1.86 | 3.18 |
| $I_2$ No. | 5.9 | 6.5 | 7.0 |
| Ethylene/propylene wt ratio | 59/41 | 62/38 | 63/37 |
| Tg | −54 | −56 | −54 |

## Claims

1. A process for the preparation of a compound of the formula

$$OV(OCH_2R)_p(OR')_qX_m$$

Where R is a tertiary alkyl having 4 to 18 carbon atoms; R' is a $C_1$-$C_{18}$ alkyl, or if q is 2, R' can also be a $C_2$-$C_8$ linear or branched alkylene; X is chlorine, bromine or iodine; m is 0, 1, or 2; p is 1, 2 or 3; and q is 3-(p+m) with the limitation that if p is 2 and R is tertiary butyl, then X cannot be chlorine, characterised in that the process comprises reacting p moles of an alcohol of the formula $RCH_2OH$ with 1 mole of $VOX_v$ where v is the sum of q, m and p; under a continual stream of nitrogen gas in the absence of an acid acceptor.

2. A process according to claim 1 characterised in that R is a tertiary alkyl having 4 to 12 carbon atoms; R' is $C_1$-$C_{12}$ alkyl, or if q is 2, R' can also be $C_2$-$C_6$ linear or branched alkylene; X is chlorine or bromine; m is 0 or 1; p is 2 or 3; and q is 3-(p+m); with the limitation that if p is 2 then m is 0.

3. A process according to claim 2 characterised in that R is a tertiary alkyl of 4 to 6 carbon atoms; R' is a $C_3$-$C_6$ alkyl; n is 1; m is 0; p is 2 or 3 and q is 0 or 1.

4. A process according to claim 1 characterised in that the compound is tris-neopentyl vanadate or dichloropentyl vanadate.

5. A process according to claim 1 characterised in that R, m and p have the following values:-

tertiary alkyl having 12 carbon atoms, 0, 3;

**6.** A process according to claim 1 characterised in that R, R', m and p have the sets of values:-
(a) tertiary butyl, butyl, 0, 2;
(b) tertiary butyl, isopropyl, 1, 1;
(c) tertiary alkyl having 18 carbon atoms, methyl, 0, 2;
(d) tertiary hexyl, 2,2-dimethylpropylene, 0, 1;
(e) tertiary alkyl having 18 carbon atoms, butylene, 0, 1.

**7.** A process for preparation of a compound of formula

$$V(OCH_2\,R)_p(OR')_qX_m$$

where R is a tertiary alkyl having 4 to 18 carbon atoms; R' is a $C_1$-$C_{18}$ alkyl or if q is 2, R' can be a $C_2$-$C_8$ linear or branched alkylene; X is chlorine, bromine or iodine; m is 0, 1, 2 or 3; p is an integer of 1 to 4; and q is 4-(p+m); characterised in that the process comprises reacting p moles of an alcohol of the formula $RCH_2OH$ with one mole of $VX_4$ under a continual stream of nitrogen gas in the presence of an acid acceptor.

**8.** A process as claimed in claim 7 characterised in that R, m and p have the following values:-
butyl, 0, 0.

**9.** A process as claimed in claim 7 characterised in that R, R', m and p have the sets of values
(a) tertiary alkyl having 12 carbon atoms, alkyl having 12 carbon atoms, 0, 2;
(b) tertiary butyl, alkyl having 12 carbon atoms, 1, 1.

**10.** A process for the polymerisation of a monomer characterised in that the monomer is selected from ethylene, ethylene and at least one compound of the formula $CH_2$=$CHR^1$ where $R^1$ is $C_1$-$C_{10}$ alkyl and ethylene, at least one compound of the formula $CH_2$=$CHR^1$ where $R^1$ is $C_1$ to $C_{10}$ alkyl and a non-conjugated polymerizable diene and the process comprises the polymerising of said monomer in the presence of a catalytic amount of a compound of the formula

$$(O)_nV(OCH_2R)_p(OR')_qX_m$$

where R is a tertiary alkyl having 4 to 18 carbon atoms; R' is a $C_1$-$C_{18}$ alkyl, or if q is 2, R' can also be $C_2$-$C_8$ linear or branched alkylene; X is chlorine, bromine or iodine; n is 0 or 1; if n is 0 then m is 0, 1 or 2; p is 1, 2 or 3; and q is 4-(p+m); if n is 1 then m is 0, 1 or 2; p is 1, 2 or 3; and q is 3-(p+m) and a compound of the formula $R^2_rAlX^2_s$ where $R^2$ is $C_1$-$C_{12}$ alkyl or $C_7$-$C_9$ aralkyl; $X^2$ is a halogen atom; r is 1, 1.5, 2 or 3; and s is 3-r.

**11.** A process according to claim 10 characterised in that R is a tertiary alkyl having 4 to 12 carbon atoms; R' is a $C_1$-$C_{12}$ alkyl, or if q is 2, R' can also be $C_2$-$C_6$ linear or branched alkylene; X is chlorine or bromine; n is 1; m is 0 or 1; p is 2 or 3 and q is 3-(p+m).

**12.** A process according to claim 11 characterised in that R is a tertiary alkyl having 4 to 6 carbon atoms; R' is a $C_3$-$C_6$ alkyl; n is 1; m is 0; p is 2 or 3 and q is 0 or 1.

**13.** A composition characterised in that it comprises:

a compound of the formula $(O)_nV(OCH_2R)_p(OR')_qX_m$ where R is a tertiary alkyl having 4 to 18 carbon atoms; R' is a $C_1$-$C_{18}$ alkyl, or if q is 2, R' can also be a $C_2$-$C_8$ linear or branched alkylene; X is chlorine, bromine or iodine; n is 0 or 1; if n is 0 then m is 0, 1, 2 or 3; p is an integer of 1 to 4; and q is 4-(p+m); if n is 1 then m is 0, 1 or 2; p is 1, 2 or 3; and q is 3-(p+m); and

a compound of the formula $Y_tX^1_uCC(R^3)$=$C(R^4)R^5$ where Y ishydrogen, cyano or $C_2$-$C_{19}$ carbalkoxy; $X^1$ is chlorine or bromine; $R^3$ is hydrogen, chlorine, bromine or -$COOR^6$ wherein $R^6$ is $C_1$-$C_{18}$ alkyl, $C_3$-$C_{18}$ alkenyl, $C_5$-$C_6$ cycloalkyl, $C_7$-$C_9$ aralkyl or $C_6$-$C_{10}$ aryl; $R^4$ is hydrogen, chlorine, bromine or $C_1$-$C_{18}$ linear or branched alkyl; or $R^3$ and $R^4$ together is $C_3$-$C_{10}$ alkylene; $R^5$ is an electron withdrawing group; u is 1, 2 or 3; and t is 3-u

**14.** A composition according to claim 13 characterised in that it includes a compound having the formula $R^2_rA\ell X^2_s$ where $R^2$ is $C_1$-$C_{12}$ alkyl or $C_7$-$C_9$ aralkyl; $X^2$ is a halogen atom; r is 1, 1.5, 2 or 3; and s is 3-r.

## Patentansprüche

1. Verfahren zur Herstellung einer Verbindung der Formel

$$OV(OCH_2R)_p(OR')_qX_m$$

worin R ein tertiäres Alkyl mit 4 bis 18 Kohlenstoffatomen; R' ein $C_1$ bis $C_{18}$-Alkyl ist oder, wenn q 2 ist, R' auch ein lineares oder verzweigtes $C_2$ bis $C_8$-Alkylen sein kann; X Chlor, Brom oder Jod ist; m 0, 1 oder 2 ist; p 1, 2 oder 3 ist und q 3-(p+m) mit der Maßgabe ist, daß, wenn p 2 ist und R tertiäres Butyl ist, X nicht Chlor sein kann, **dadurch gekennzeichnet,** daß das Verfahren die Umsetzung von p Molen eines Alkohols der Formel $RCH_2OH$ mit 1 Mol $VOX_v$, worin v die Summe aus q, m und p ist; unter einem kontinuierlichen Strom von Stickstoffgas in Abwesenheit eines Säureakzeptors umfaßt.

2. Verfahren nach Anspruch 1, **dadurch gekennzeichnet**, daß R ein tertiäres Alkyl mit 4 bis 12 Kohlenstoffatomen; R' $C_1$ bis $C_{12}$-Alkyl ist oder, wenn q 2 ist, R' auch ein lineares oder verzweigtes $C_2$ bis $C_6$-Alkylen sein kann; X Chlor oder Brom ist; m 0 oder 1 ist; p 2 oder 3 ist; und q 3-(p+m) mit der Maßgabe ist, daß wenn p 2 ist, m 0 ist.

3. Verfahren nach Anspruch 2, **dadurch gekennzeichnet,** daß R ein tertiäres Alkyl mit 4 bis 6 Kohlenstoffatomen; R' ein $C_3$ bis $C_6$-Alkyl; n 1; m 0, p 2 oder 3 und q 0 oder 1 ist.

4. Verfahren nach Anspruch 1, **dadurch gekennzeichnet,** daß die Verbindung Tris-Neopentylvanadat oder Dichlorpentylvanadat ist.

5. Verfahren nach Anspruch 1, **dadurch gekennzeichnet,** daß R tertiäres Alkyl mit 12 Kohlenstoffatomen ist und m und p die Werte 0 bzw. 3 haben.

6. Verfahren nach Anspruch 1, **dadurch gekennzeichnet,** daß R, R', m und p folgende Gruppen von Bedeutungen haben:
   (a) tertiäres Butyl, Butyl, 0, 2;
   (b) tertiäres Butyl, Isopropyl, 1, 1;
   (c) tertiäres Alkyl mit 18 Kohlenstoffatomen, Methyl, 0;
   (d) tertiäres Hexyl, 2,2-Dimethylpropylen, 0,1;
   (e) tertiäres Alkyl mit 18 Kohlenstoffatomen, Butylen, 0, 1.

7. Verfahren zur Herstellung einer Verbindung der Formel

$$V(OCH_2R)_p(OR')_qX_m$$

worin R ein tertiäres Alkyl mit 4 bis 18 Kohlenstoffatomen; R' ein $C_1$ bis $C_{18}$-Alkyl ist, oder, wenn q 2 ist, R' ein lineares oder verzweigtes $C_2$ bis $C_8$-Alkylen sein kann; X Chlor, Brom oder Jod ist; m 0, 1, 2 oder 3 ist; p eine ganze Zahl von 1 bis 4 ist; und q 4-(p+m) ist, **dadurch gekennzeichnet,** daß das Verfahren die Umsetzung von p Molen eines Alkohols der Formel $RCH_2OH$ mit 1 Mol $VX_4$ unter einem kontinuierlichen Strom von Stickstoffgas in Gegenwart eines Säureakzeptors umfaßt.

8. Verfahren nach Anspruch 7, **dadurch gekennzeichnet**, daß R, m und p folgende Bedeutungen bzw. Werte haben:
   Butyl, 0, 0.

9. Verfahren nach Anspruch 7, **dadurch gekennzeichnet,** daß R, R', m und p folgende Gruppen von Bedeutungen haben:
   (a) tertiäres Alkyl mit 12 Kohlenstoffatomen, Alkyl mit 12 Kohlenstoffatomen, 0, 2;
   (b) tertiäres Butyl, Alkyl mit 12 Kohlenstoffatomen, 1, 1.

10. Verfahren zur Polymerisation eines Monomers, **dadurch gekennzeichnet,** daß das Monomer ausgewählt ist aus Ethylen, Ethylen und mindestens einer Verbindung der Formel $CH_2=CHR^1$, worin $R^1$ ein $C_1$- bis $C_{10}$-Alkyl und Ethylen ist, mindestens einer Verbindung der Formel $CH_2=CHR^1$, worin $R^1$ $C_1$ bis $C_{10}$-Alkyl ist und einem nicht-konjugierten polymerisierbaren Dien und daß das Verfahren die Polymerisation des Monomers und einer Verbindung der Formel $R_r^2AlX_S^2$, worin $R^2$ $C_2$- bis $C_{12}$-Alkyl oder $C_7$- bis $C_9$-Aralkyl; $X^2$ ein Halogenatom; r 1, 1,5, 2 oder 3 und s 3-r ist, in Gegenwart einer katalytischen Menge einer Verbindung der Formel

$$(O)_nV(OCH_2R)_p(OR')_qX_m$$

umfaßt, worin R ein tertiäres Alkyl mit 4 bis 18 Kohlenstoffatomen; R' $C_1$ bis $C_{18}$-Alkyl ist, oder, wenn q 2

ist, R' auch ein lineares oder verzweigtes $C_2$ bis $C_8$-Alkylen sein kann; X Chlor, Brom oder Jod ist; n 0 oder 1 ist; wenn n 0 ist, m 0, 1 oder 2 ist; p 1, 2 oder 3 ist; und q 4-(p+m) ist; wenn n 1 ist, m 0, 1 oder 2 ist; p 1, 2 oder 3 ist; q 3-(p+m) ist.

**11.** Verfahren nach Anspruch 10, **dadurch gekennzeichnet,** daß R ein tertiäres Alkyl mit 4 bis 12 Kohlenstoffatomen; R' ein $C_1$ bis $C_{12}$-Alkyl ist, oder, wenn q 2 ist, R' auch ein lineares oder verzweigtes $C_2$-$C_6$-Alkylen sein kann; X Chlor oder Brom ist; n 1 ist; m 0 oder 1 ist; p 2 oder 3 und q 3-(p+m) ist.

**12.** Verfahren nach Anspruch 11, **dadurch gekennzeichnet,** daß R ein tertiäres Alkyl mit 4 bis 6 Kohlenstoffatomen; R' ein $C_3$ bis $C_6$-Alkyl; n 1; m 0; p 2 oder 3 und q 0 oder 1 ist.

**13.** Zusammensetzung, **dadurch gekennzeichnet,** daß sie eine Verbindung der Formel $(O)_nV(OCH_2R)_p(OR')_qX_m$, worin R ein tertiäres Alkyl mit 4 bis 18 Kohlenstoffatomen, R' ein $C_1$ bis $C_{18}$-Alkyl ist oder, wenn q 2 ist, R' auch ein lineares oder verzweigtes $C_2$ bis $C_8$-Alkylen sein kann; X Chlor, Brom oder Jod; n 0 oder 1 ist; wenn n 0 ist, m 0, 1, 2 oder 3 ist; p eine ganze Zahl von 1 bis 4 ist; und q 4-(p+m) ist; wenn n 1 ist, m 0, 1 oder 2 ist; p 1, 2 oder 3 ist; und q 3-(p+m) ist; und
eine Verbindung der Formel $Y_tX^1_uCC(R^3)=C(R^4)R^5$, worin Y Wasserstoff, Cyan oder $C_2$ bis $C_{19}$-Carbalkoxy, $X^1$ Chlor oder Brom, $R^3$ Wasserstoff, Chlor, Brom oder $-COOR^6$ ist, worin $R^6$ ein $C_1$ bis $C_{18}$-Alkyl, $C_3$ bis $C_{18}$-Alkenyl, $C_5$-$C_6$-Cycloalkyl, $C_7$ bis $C_9$-Aralkyl oder $C_6$ bis $C_{10}$-Aryl ist; $R^4$ Wasserstoff, Chlor, Brom oder ein lineares oder verzweigtes $C_1$ bis $C_{18}$-Alkyl ist; oder $R^3$ und $R^4$ zusammen ein $C_3$ bis $C_{10}$-Alkylen sind; $R^5$ eine ein Elektron abziehende Gruppe ist; u 1, 2 oder 3 ist; und t 3-u ist, umfaßt.

**14.** Zusammensetzung nach Anspruch 13, **dadurch gekennzeichnet,** daß sie eine Verbindung der Formel $R^2_rAX^2_s$ einschließt, worin $R^2$ ein $C_1$ bis $C_{12}$-Alkyl oder ein $C_7$ bis $C_9$-Aralkyl ist; $X^2$ ein Halogenatom, r 1, 1,5, 2 oder 3 ist; und s 3-r ist.

## Revendications

**1.** Procédé pour la préparation d'un composé de la formule

$$OV(OCH_2R)_p(OR')_qX_m$$

où R est un alkyle tertiaire ayant 4 à 18 atomes de carbone ; R' est un alkyle $C_1$-$C_{18}$, ou si q est 2, R' peut également être un alkylène $C_2$-$C_8$ linéaire ou ramifié ; X est chlore, brome ou iode ; m est 0, 1 ou 2 ; p est 1, 2 ou 3 ; et q est 3-(p+m) ; avec la limite que si p est 2 et R est butyle tertiaire, X ne peut être chlore, caractérisé en ce que le procédé comprend la réaction de p moles d'un alcool de la formule $RCH_2OH$ avec 1 mole de $VOX_v$ où v est la somme de q, m et p ; sous un courant continu d'azote gazeux en l'absence d'un accepteur d'acide.

**2.** Procédé selon la revendication 1, caractérisé en ce que R est un alkyle tertiaire ayant 4 à 12 atomes de carbone; R' est alkyle $C_1$-$C_{12}$ ou si q est 2, R' peut également être alkylène $C_2$-$C_6$ linéaire ou ramifié ; X est chlore ou brome ; m est 0 ou 1 ; p est 2 ou 3 ; et q est 3-(p+m) ; avec la limite que si p est 2, alors m est 0.

**3.** Procédé selon la revendication 2, caractérisé en ce que R est un alkyle tertiaire de 4 à 6 atomes de carbone ; R' est un alkyle $C_3$-$C_6$ ; n est 1 ; m est 0 ; p est 2 ou 3 et q est 0 ou 1.

**4.** Procédé selon la revendication 1, caractérisé en ce que le composé est tris-néopentyl vanadate ou dichloropentyl vanadate.

**5.** Procédé selon la revendication 1, caractérisé en ce que R, m et p ont les valeur suivantes :
alkyle tertiaire ayant 12 atomes de carbone, 0, 3.

**6.** Procédé selon la revendication 1, caractérisé en ce que R, R', m et p ont les groupes de valeurs :
(a) butyle tertiaire, butyle, 0, 2 ;
(b) butyle tertiaire, isopropyle, 1, 1 ;
(c) alkyle tertiaire ayant 18 atomes de carbone, méthyle, 0, 2 ;
(d) hexyle tertiaire, 2,2-diméthylpropylène, 0, 1 ;
(e) alkyle tertiaire ayant 18 atomes de carbone, butylène, 0, 1.

**7.** Procédé de préparation d'un composé de la formule

$$V(OCH_2R)_p(OR')_q X_m$$

où R est un alkyle tertiaire ayant 4 à 18 atomes de carbone ; R' est un alkyle $C_1$-$C_{18}$, ou si q est 2, R' peut également être alkylène $C_2$-$C_8$ linéaire ou ramifie ; X est chlore, brome ou iode ; m est 0, 1, 2 ou 3 ; p est un nombre entier de 1 à 4 ; et q est 4-(p+m) ; caractérisé en ce que le procédé comprend la réaction de p moles d'un alcool de la formule $RCH_2OH$ avec une mole de $VX_4$ sous un courant continu d'azote gazeux en présence d'un accepteur d'acide.

**8.** Procédé selon la revendication 7, caractérisé en ce que R, m et p ont les valeurs suivantes :
butyle, 0, 0.

**9.** Procédé selon la revendication 7, caractérisé en ce que R, R', m et p ont les groupes de valeurs
(a) alkyle tertiaire ayant 12 atomes de carbone, alkyle ayant 12 atomes de carbone, 0, 2 ;
(b) butyle tertiaire, alkyle ayant 12 atomes de carbone, 1, 1.

**10.** Procédé pour la polymérisation d'un monomère, caractérisé en ce que le monomère est choisi parmi éthylène, éthylène et au moins un composé de la formule $CH_2$=$CHR^1$, où $R^1$ est alkyle $C_1$-$C_{10}$ et éthylène, au moins un composé de la formule $CH_2$=$CHR^1$ où $R^1$ est alkyle $C_1$ à $C_{10}$ et un diène polymérisable non conjugué et le procédé comprend la polymérisation dudit monomère en présence d'une quantité catalytique d'un composé de la formule

$$(O)_nV(OCH_2R)_p(OR')_qX_m$$

où R est un alkyle tertiaire ayant 4 à 18 atomes de carbone ; R' est alkyle $C_1$-$C_{18}$ ou bien si q est 2, R' peut également être alkylène $C_2$-$C_8$ linéaire ou ramifié ; X est chlore, brome ou iode ; n est 0 ou 1 ; si n est 0, m est 0, 1 ou 2 p est 1, 2 ou 3 ; et q est 4-(p+m) ; si n est 1, alors m est 0, 1 ou 2 ; p est 1, 2 ou 3 ; et q est 3-(p+m) et un composé de la formule $R^2_rAlX^2_s$ où $R^2$ est alkyle $C_1$-$C_{12}$ ou aralkyle $C_7$-$C_9$ ; $X^2$ est un atome d'halogène ; R est 1, 1,5, 2 ou 3 ; et s est 3-r.

**11.** Procédé selon la revendication 10, caractérisé en ce que R est un alkyle tertiaire ayant 4 à 12 atomes de carbone ; R' est un alkyle $C_1$-$C_{12}$ ou bien si q est 2, R' peut également être alkylène $C_2$-$C_6$ linéaire ou ramifié ; X est chlore ou brome ; n est 1 ; m est 0 ou 1 ; p est 2 ou 3 et q est 3-(p+m).

**12.** Procédé selon la revendication 11, caractérisé en ce que R est un alkyle tertiaire ayant 4 à 6 atomes de carbone ; R' est un alkyle $C_3$-$C_6$ ; n est 1 ; m est 0 ; p est 2 ou 3 et q est 0 ou 1.

**13.** Composition caractérisée en ce qu'elle comprend :

un composé de la formule $(O)_nV(OCH_2R)_p(OR')_qX_m$ où R est un alkyle tertiaire ayant 4 à 18 atomes de carbone ; R' est un alkyle $C_1$-$C_{18}$ ; ou bien si q est 2, R' peut également être un alkylène $C_2$-$C_8$ linéaire ou ramifié ; X est chlore, brome ou iode ; n est 0 ou 1 ; si n est 0, alors m est 0, 1, 2, ou 3 ; p est un nombre entier de 1 à 4 ; et q est 4-(p+m) ; si n est 1 alors m est 0, 1 ou 2 ; p est 1, 2 ou 3 ; et q est 3-(p+m) ; et

un composé de la formule $Y_tX^1_uCC(R^3)$=$C(R^4)R^5$ où Y est hydrogène, cyano ou carbalcoxy $C_2$-$C_{19}$ ; $X^1$ est chlore ou brome ; $R^3$ est hydrogène, chlore, brome ou $-COOR^6$ où $R^6$ est alkyle $C_1$-$C_{18}$, alkényle $C_3$-$C_{18}$, cycloalkyle $C_5$-$C_6$, aralkyle $C_7$-$C_9$ ou aryle $C_6$-$C_{10}$ ; $R^4$ est hydrogène, chlore, brome ou alkyle $C_1$-$C_{18}$ linéaire ou ramifié , ou bien $R^3$ et $R^4$ forment ensemble un alkylène $C_3$-$C_{10}$ ; $R^5$ est un groupe retirant des électrons ; u est 1, 2 ou 3 ; et t est 3-u.

**14.** Composition selon la revendication 13, caractérisée en ce qu'elle contient un composé ayant pour formule $R^2_rAlX^2_s$ où $R^2$ est alkyle $C_1$-$C_{12}$ ou aralkyle $C_7$-$C_9$ ; $X^2$ est un atome d'halogène ; r est 1, 1,5, 2 ou 3 ; et s est 3-r.